(19) Europäisches Patentamt
European Patent Office
Office européen des brevets

(11) Numéro de publication : **0 214 891**
**B1**

# (12) FASCICULE DE BREVET EUROPÉEN

(45) Date de publication du fascicule du brevet : **24.01.90**

(51) Int. Cl.[5] : **C 08 F 4/02**, C 08 F 10/00

(21) Numéro de dépôt : **86401759.5**

(22) Date de dépôt : **05.08.86**

(54) **Procédé de fabrication de particules sphériques de composés de métaux du groupe II.**

(30) Priorité : **13.08.85 FR 8512340**

(43) Date de publication de la demande :
**18.03.87 Bulletin 87/12**

(45) Mention de la délivrance du brevet :
**24.01.90 Bulletin 90/04**

(84) Etats contractants désignés :
**AT BE DE FR GB IT NL SE**

(56) Documents cités :
**PATENTS ABSTRACTS OF JAPAN, vol. 7, no. 155 (C-175)[1300], 7 juillet 1983; & JP-A-58 65 707 (NIPPON SEKIYU K.K.) 19-04-1983**

(73) Titulaire : **ATOCHEM**
**4 & 8, Cours Michelet La Défense 10**
**F-92800 Puteaux (FR)**

(72) Inventeur : **Duranel, Laurent**
**3, Rue du Hameau de Trespoey**
**F-64000 Pau (FR)**
Inventeur : **Sanchez, Nadine**
**32, Boulevard Champetier de Ribes**
**F-64000 Pau (FR)**

(74) Mandataire : **Foiret, Claude et al**
**ATOCHEM Département Propriété Industrielle**
**F-92091 Paris la Défense 10 Cédex 42 (FR)**

**EP 0 214 891 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention concerne un procédé de fabrication de particules sensiblement sphériques ou sphéroïdales, c'est-à-dire dont la forme se rapproche de celle d'une sphère, de composés de métaux du groupe 11, par précipitation dans un milieu non solvant du composé en solution dans un solvant.

Il est connu de la demande de brevet japonais 81 JP 164106 (JP-A-58/65707) de mettre en solution un halogénure de magnésium et de le précipiter dans un liquide organique non solvant. Il s'agit là d'un moyen classique de précipitation ne permettant d'obtenir finalement que des produits pulvérulents sans forme particulière.

De plus en plus les composés métalliques, en particulier les composés des métaux du groupe II du tableau de Mendeleiev, de morphologie sphérique sont recherchés. Ces composés sphériques trouvent leur principale application comme support de catalyseur. Dans le cas par exemple de la catalyse Ziegler, il est connu d'employer des sels métalliques comme le $MgCl_2$ en tant que support des sels des métaux de transition actifs en polymérisation ou en copolymérisation des oléfines. Dans cette dernière application, la morphologie du support est quelconque et non contrôlée ce qui est défavorable pour l'obtention d'une masse volumique apparente élevée et une bonne coulabilité du polymère obtenu après synthèse. Il est connu que ces propriétés sont nettement améliorées lorsque le polymère possède une morphologie sphérique résultant d'une morphologie sphérique du catalyseur ou de son support. C'est ainsi que selon la demande de brevet européen 83074 est décrite une façon d'obtenir cette morphologie sous l'apparence de billes liquides. Selon cette demande on prépare une émulsion d'un composé à base de magnésium et de titane en présence d'un tensioactif en milieu inerte sous très forte agitation. Cette technique présence le double inconvénient de conduire à un système catalytique liquide et d'exclure la possibilité de fabriquer un support vierge susceptible d'être utilisé à différentes fins catalytiques et dans différentes conditions.

Selon la présente invention il est possible de préparer des particules de composés de métaux du groupe II sensiblement sphériques et solides par précipitations contrôlées, et, susceptibles d'être utilisées, entre autre, comme support catalytique du type Ziegler.

L'invention consistant à dissoudre dans un solvant un composé à base de métal du groupe II et à le reprécipiter dans un milieu non solvant est caractérisé en ce que le milieu non solvant est constitué d'au moins deux liquides non solvants du dit composé, l'un d'eux étant non miscible avec le solvant ayant servi à la dissolution de ce composé.

Les composés à base de métal du groupe II du tableau de Mendeleiev doivent être solubles dans au moins un solvant, ils répondent habituellement à la formule générale :

$$M_eX_n(OR)_{2-n}$$

dans laquelle

$M_e$ est un métal choisi dans le groupe II du tableau de Mendeleiev, le magnésium étant particulièrement recommandé lorsqu'on souhaite préparer des supports catalytiques de type Ziegler

X est un halogène choisi parmi le chlore, le brome ou l'iode, et plus particulièrement le chlore.

R est l'hydrogène ou un radical hydrocarboné linéaire, ramifié ou éventuellement cyclique, saturé ou insaturé, éventuellement aromatique. Ce radical peut posséder en outre un ou plusieurs hétéroatomes. comme les halogènes, l'oxygène, l'azote, le soufre et le phosphore, et $0 \leqslant n \leqslant 2$.

Les composés métalliques sont de préférence le chlorure de magnésium ou le chlorure de calcium.

Il n'est bien entendu pas exclu, en vue d'une coprécipitation de dissoudre initialement plusieurs composés métalliques du même métal ou de métaux différents du groupe II.

Ainsi qu'il est précisé précédemment le composé métallique est dissous dans un solvant. Sont définis comme solvants les produits organiques capables de dissoudre le composé métallique. Il est toutefois recommandé d'utiliser un solvant dans lequel la solubilité du composé métallique est importante. De façon à augmenter la solubilité du composé dans le solvant, il n'est pas exclu d'utiliser des solutions à une température supérieure à la température ambiante. Dans le cas particulier donné à titre d'exemple du chlorure de magnésium, il est recommandé d'employer un solvant dans lequel le sel est miscible à plus de 5 % en poids à température ambiante. parmi les solvants recommandés on peut citer : l'eau, le diméthylformamide, le méthanol, et l'éthanol.

Dans la mesure où un des deux liquides non solvants utilisés ultérieurement à la précipitation du composé métallique est non miscible au milieu solvant, il n'est pas exclu d'utiliser un mélange de solvants comme milieu de dissolution.

Le composé métallique dissous dans le milieu solvant est précipité dans le milieu non solvant. De façon générale, la solution est versée dans le milieu non solvant sous agitation. De préférence la solution est introduite goutte à goutte dans le milieu solvant maintenu sous agitation modérée. De la taille des gouttes dépend principalement le diamètre moyen des particules finales.

Pour obtenir des particules précipitées sensiblement sphériques, le milieu non solvant doit nécessairement être composé d'au moins deux liquides caractérisés par leurs propriétés vis-à-vis du milieu solvant du composé de métal du groupe II. Au moins un de ces liquides doit être miscible avec le

milieu solvant et au moins un deux doit être non miscible avec ce même milieu. La valeur du rapport entre les liquides miscibles et non miscibles est choisi de façon à ce que d'une part la précipitation puisse avoir lieu et que d'autre part elle soit suffisamment lente pour favoriser la formation de particules sphériques. Ces deux conditions sont facilement accessibles à l'homme de métier par quelques essais de routine, en fonction de la nature des liquides et du milieu solvant ainsi que du composé de métal du groupe II choisis. Habituellement un rapport volumique du liquide miscible sur le liquide non miscible compris entre 0,1 et 200, et mieux entre 0,5 et 200, permet d'obtenir des résultats satisfaisants. Selon les solvants utilisés peuvent être envisagés par exemple comme milieu non solvant les mélanges de dioxane ou d'acétone avec un hydrocarbure ou le chlorure de méthylène ou même d'hydrocarbure et de chlorure de méthylène quand ce dernier est non miscible avec le milieu solvant.

A titre exemple et de façon non limitative, on peut citer dans le cas du chlorure de magnésium : l'eau, le méthanol, l'éthanol ou le diméthylformamide comme solvant, avec d'une part comme milieu non solvant, dans le cas où le solvant est l'eau, un mélange de dioxane ou d'acétone comme liquide miscible avec un hydrocarbure ou le chlorure de méthylène comme liquide non miscible, ou, d'autre part comme milieu non solvant, dans le cas où le solvant est le méthanol ou le diméthylformamide, un mélange de dioxane ou de chlorure de méthylène comme liquide miscible avec un hydrocarbure comme liquide non miscible.

Les particules sensiblement sphériques précipitées sont récupérées du milieu par tout moyen connu, tel que filtration, et séchées de préférence sous courant de gaz inerte.

Les exemples suivants permettent d'illustrer l'invention sans toutefois la limiter.

Exemple 1 (comparatif)

On introduit 350 ml de dioxane 1-4 dans un réacteur cylindrique à double enveloppe muni d'une agitation à pales et d'une plaque frittée à sa partie inférieure. A raison de 40 ml/h, on injecte 20 ml d'une solution saturée à température ambiante de chlorure de magnésium anhydre dans du méthanol. L'agitation est maintenue à 500 tr/mn. A la fin de l'injection, on filtre et on lave le solide blanc précipité obtenu avec un hydrocarbure saturé. Le solide est séché sous courant d'azote à 70 °C. On récupère 6,4 g de solide pulvérulent composé de particules sans forme définie et de diamètres compris entre 10 et 200 μm. (Figure 1, photo au grossissement 80).

Exemple 2

Dans un réacteur cylindrique de 1 litre on introduit du dioxane 1-4, de l'heptane et de l'huile silicone (« FLUID 710 ®» de Rhône-Poulenc) à raison respectivement de 15,2 et 3 parties en volume. A raison de 2 ml/h on injecte dans ce mélange 13 ml d'une solution saturée à température ambiance de chlorure de magnésium dans le méthanol. L'agitation est fixée à 250 tr/mn. Après filtration, lavage puis séchage sous courant d'azote à 70 °C on récupère 4,5 g de solide précipité sous forme de billes sphériques de diamètre moyen de 850 μm. (Figure 2, photo au grossissement 10).

Exemple 3

Dans un réacteur identique à celui utilisé dans l'exemple 1 on introduit successivement du dioxane 1-4, de l'acétone, de l'heptane et du chlorure de méthylène respectivement dans des proportions volumiques de 4, 3, 2 et 2.6 ml d'une solution saturée de chlorure de magnésium dans l'eau sont injectés à une vitesse de 30 ml/h sous agitation de 500 t/min. On récupère après filtration, lavage et séchage 7,2 g de particules sphériques de diamètres compris entre 100 et 250 μm. (Figure 3, photo au grossissement 50).

Exemple 4

On reprend les conditions opératoires de l'exemple 1, mais le milieu non solvant est composé de dioxane 1-4, d'heptane et de chlorure de méthylène dans les proportions volumiques respectives de 5 - 1 - 3. Le chlorure de magnésium en solution dans l'eau est injecté à raison de 10 ml/h. On récupère le solide précipité de la même façon que dans l'exemple 3. Les particules obtenues sont sphériques avec un diamètre moyen d'environ 100 μm. (Figure 4, photo au grossissement 80).

Exemple 5

On reprend les conditions opératoires de l'exemple 1, avec un milieu non solvant composé de dioxane 1-4 et de chlorure de méthylène dans un rapport volumique égal à 3. La solution aqueuse injectée est préparée à partir d'une solution saturée dans l'eau de chlorure de magnésium et d'une autre de chlorure de calcium de façon à ce que le rapport massique final $MgCl_2/CaCl_2$ soit égal à 9. Après précipitation, filtration et lavage on obtient des particules sphériques dont le diamètre moyen est compris entre 150 et 250 μm. (Figure 5, photo au grossissement 80).

## Revendications

1. Procédé de fabrication de particules sphériques de composés de métaux du groupe II du tableau de Mendeleiev consistant à dissoudre le composé dans un milieu solvant puis à le précipiter en versant la solution dans un milieu non solvant caractérisé en ce que le milieu non solvant est constitué d'au moins deux liquides non solvants du dit composé, au moins l'un d'eux étant non miscible avec ce milieu solvant et au moins l'un d'eux étant miscible avec ce milieu solvant.

2. Procédé selon la revendication 1 caractérisé en ce que le composé métallique possède la formule générale :

$$M_eX_n(OR)_{2-n}$$

dans laquelle :

$M_e$ est un métal choisi dans le groupe II du tableau de Mendeleiev
X est un halogène
R est l'hydrogène ou un radical hydrocarboné $0 \leqslant n \leqslant 2$

3. Procédé selon la revendication 2 caractérisé en ce que le composé métallique est le chlorure de magnésium ou le chlorure de calcium.

4. Procédé selon l'une des revendications 1 à 3 caractérisé en ce que, le solvant est choisi parmi l'eau, le méthanol, l'éthanol, le dimethylformamide.

5. Procédé selon l'une des revendications 1 à 4 caractérisé en ce que le rapport volumique du liquide miscible sur le liquide non miscible du milieu non solvant est compris entre 0,1 et 200.

6. Procédé selon l'une des revendications 1 à 5 caractérisé en ce que le milieu non solvant, dans le cas où le milieu solvant est l'eau, est un mélange de dioxane ou d'acétone avec un hydrocarbure ou le chlorure de méthylène.

7. Procédé selon l'une des revendications 1 à 5 caractérisé en ce que le milieu non solvant, dans le cas ou le milieu solvant est le méthanol ou le diméthylformamide, est un mélange de dioxane ou de chlorure de méthylène avec un hydrocarbure.

## Claims

1. A process for the production of spherical particles of compounds of metals of group II of the Periodic Table of Elements, consisting in dissolving the compound in a solvent medium, whereafter the compound is precipitated by pouring the solution into a non-solvent medium, characterized in that the non-solvent medium is formed by at least two liquids which do not dissolve said compound, at least one of them being immiscible with said solvent medium, and at least one of them being miscible with said solvent medium.

2. A process according to claim 1, characterized in that the metal compound has the general Formula :

$$M_eX_n(OR)_{2-n}$$

where :

Me is a metal selected from group II of the Periodic Table of Elements
X is a halogen
R is hydrogen or a hydrocarbon radical $0 \leqslant n \leqslant 2$

3. A process according to claim 2, characterized in that the metal compound is magnesium chloride or calcium chloride.

4. A process according to one of claims 1 to 3, characterized in that the solvent is selected from water, methanol, ethanol, dimethyl formamide.

5. A process according to one of claims 1 to 4, characterized in that the volumetric ratio between the miscible liquid and the immiscible liquid of the non-solvent medium is between 0.1 and 200.

6. A process according to one of claims 1 to 5, characterized in that if the solvent medium is water, the non-solvent medium is a mixture of dioxan or acetone with a hydrocarbon or methylene chloride.

7. A process according to one of claims 1 to 5, characterized in that if the solvent medium is methanol or dimethyl formamide, the non-solvent medium is a mixture of dioxan or methylene chloride with a hydrocarbon.

## Patentansprüche

1. Verfahren zur Herstellung kugelförmiger Teilchen von Verbindungen der Metalle der Gruppe II des Periodensystems von Mendeleiev, das darin besteht die Verbindung in einem Lösungsmittel zu lösen und

diese dann durch Gießen der Lösung in ein Medium, das die Verbindung nicht löst, auszufällen, dadurch gekennzeichnet, daß das die Verbindung nicht lösende Medium aus wenigstens zwei die Verbindung nicht lösenden Flüssigkeiten besteht, von denen wenigstens eine mit dem Lösungsmittel nicht mischbar ist und von denen wenigstens eine mit diesem Lösungsmittel mischbar ist.

2. Verfahren nach Anspruch 1, dadurch gekennzeichnet, daß die Metallverbindung die allgemeine Formel :

$$M_e X_n (OR)_{2-n}$$

aufweist in der :

$M_e$ ein Metall ausgewählt aus der Gruppe II des Periodensystems von Mendeleiev ist
X ein Halogen ist
R Wasserstoff oder ein Kohlenwasserstoffrest ist $0 \leqslant n \leqslant 2$ ist.

3. Verfahren nach Anspruch 2, dadurch gekennzeichnet, daß die Metallverbindung Magnesiumchlorid oder Calciumchlorid ist.

4. Verfahren nach einem der Ansprüche 1 bis 3, dadurch gekennzeichnet, daß das Lösungsmittel ausgewählt wird aus Wasser, Methanol, Ethanol und Dimethylformamid.

5. Verfahren nach einem der Ansprüche 1 bis 4, dadurch gekennzeichnet, daß das Volumenverhältnis der mischbaren Flüssigkeit zu der nicht mischbaren Flüssigkeit des die Verbindung nicht lösenden Mediums zwischen 0,1 und 200 liegt.

6. Verfahren nach einem der Ansprüche 1 bis 5, dadurch gekennzeichnet, daß das die Verbindung nicht lösende Medium, wenn das Lösungsmittel Wasser ist, ein Gemisch aus Dioxan oder Aceton mit einem Kohlenwasserstoff oder Methylenchlorid ist.

7. Verfahren nach einem der Ansprüche 1 bis 5, dadurch gekennzeichnet, daß das die Verbindung nicht lösende Medium, wenn das Lösungsmittel Methanol oder Dimethylformamid ist, ein Gemisch aus Dioxan oder Methylenchlorid mit einem Kohlenwasserstoff ist.

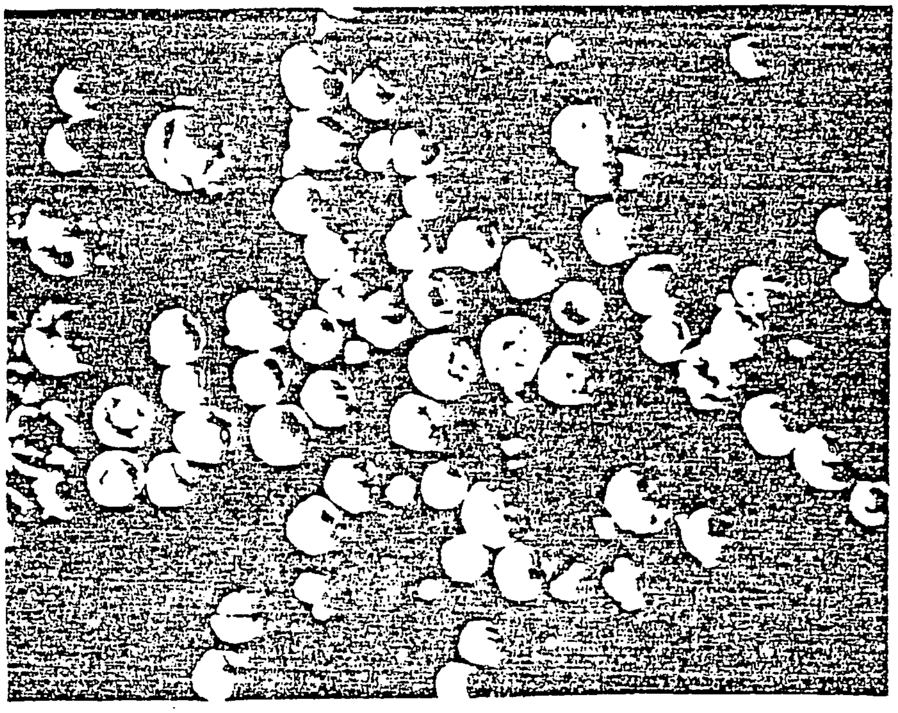

FIGURE 2

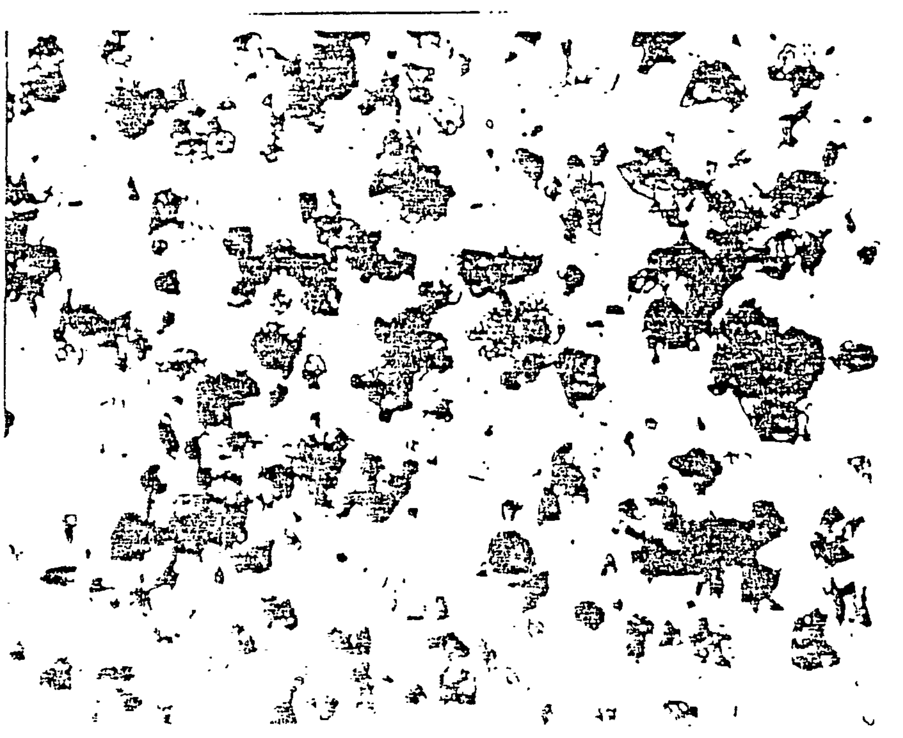

FIGURE 1

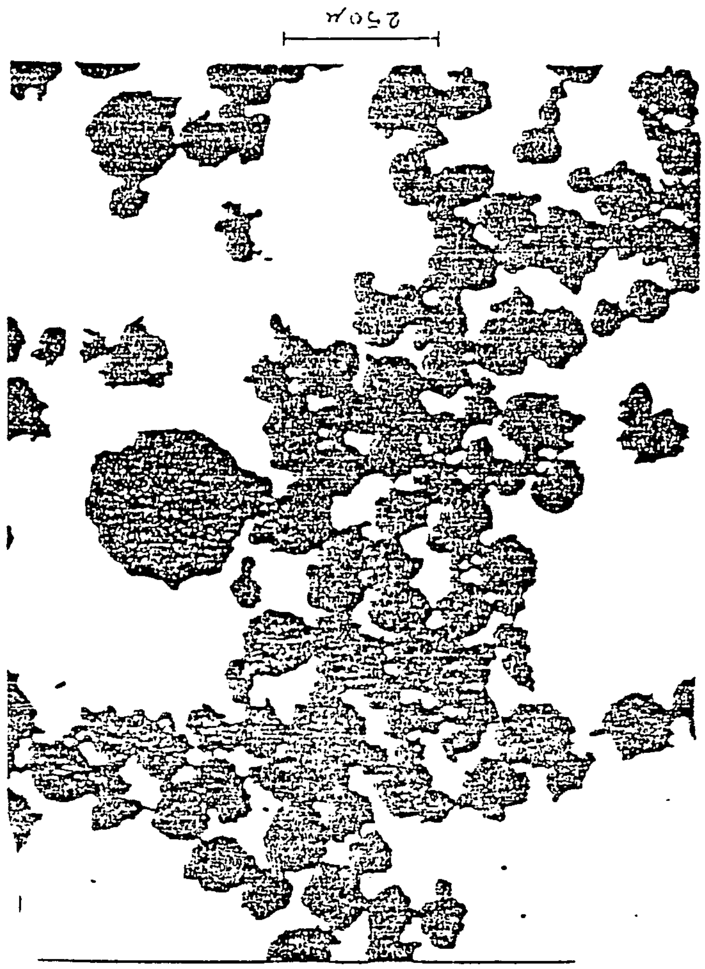


FIGURE 4

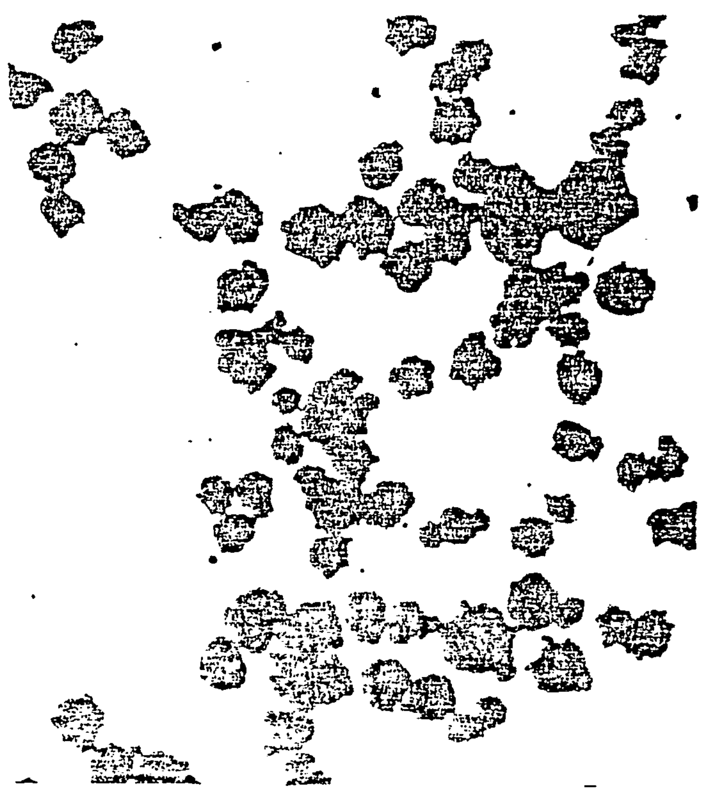

FIGURE 3

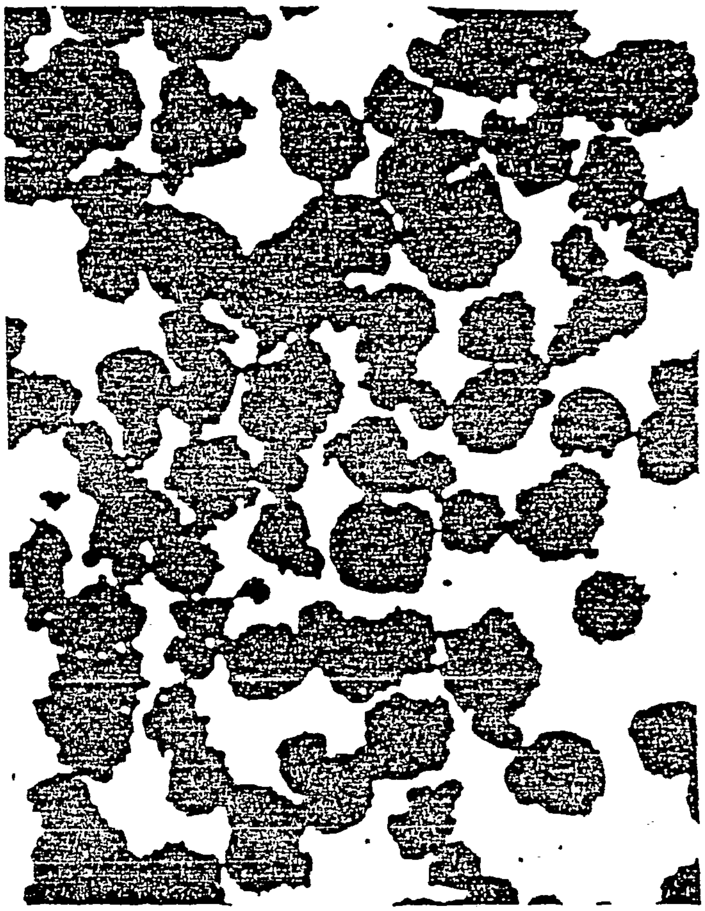

FIGURE 5